# EUROPÄISCHE PATENTSCHRIFT

(11) **EP 1 269 725 B1**
(45) Veröffentlichungstag und Bekanntmachung des Hinweises auf die Patenterteilung: **10.06.2015**
(21) Anmeldenummer: 01905681.1
(22) Anmeldetag: 24.01.2001
(51) Int. Cl.: H04Q 11/04, H04M 3/24

(54) **VERFAHREN UND ÜBERWACHUNGSSYSTEM ZUM ÜBERWACHEN WENIGSTENS EINES TEILNEHMERANSCHLUSSES**
METHOD AND MONITORING SYSTEM FOR MONITORING AT LEAST ONE SUBSCRIBER LINE
PROCÉDÉ ET SYSTÈME POUR LA SURVEILLANCE D'AU MOINS UN RACCORDEMENT D'ABONNÉ

(30) Priorität: 23.03.2000 DE 10014462
(43) Veröffentlichungstag der Anmeldung: 02.01.2003
(73) Patentinhaber: Deutsche Telekom AG, 53113 Bonn (DE)
(72) Erfinder: KESSLER, Steffen, 57299 Burbach (DE)
(74) Vertreter: Blumbach Zinngrebe
(86) Internationale Anmeldenummer: PCT/EP2001/000767
(87) Internationale Veröffentlichungsnummer: WO 2001/072021

(56) Entgegenhaltungen:
- EP-A- 0 474 189
- WO-A-91/04639

## Beschreibung

Die Erfindung betrifft ein Verfahren zur Signalisierung einer Störung wenigstens eines zu überwachenden Teilnehmeranschlusses an eine zentrale Einrichtung sowie ein Überwachungssystem zum Überwachen eines solchen Teilnehmeranschlusses.

Die Akzeptanz von öffentlichen Telekommunikationsnetzen bei den Kunden hängt wesentlich von deren Betriebssicherheit und Zuverlässigkeit ab. Eine Hauptaufgabe der Netzbetreiber besteht daher darin, innerhalb dieser Telekommunikationsnetze aufgebaute oder aufzubauende Verbindungen zu überwachen und gegebenenfalls eine Fehlerdiagnose vorzunehmen.

Eine Möglichkeit zur Überwachung von ISDN-Telekommunikationsnetzen besteht darin, ISDN-Basisanschlüsse. an der S₀-Schnittstelle beim Fernsprechteilnehmer zu messen und zu protokollieren (siehe z.B. Bedienungsanleitung ISDN S₀ Basisanschlussmess- und Prüfgerät Pegasus von Festo Didactic KG, Esslingen, Stand 02/95; Seite 85).

Aus der DE 197 29027 ist ein Verfahren zur Messung bzw. Protokollierung eines ISDN-Basisanschlusses bekannt, welches auch unabhängig vom zu überprüfenden Fernsprechteilnehmer abläuft. Dies wird dadurch erreicht, dass die U_{K0}-Schnittstelle an einer für die Messung bzw. Protokollierung günstigen Stelle der Anschlussleitung aufgetrennt wird. In der aufgetrennten U_{K0}-Schnittstelle werden die Leitungssignale in IOM-Signale und die IOM-Signale wiederum in S₀-Rahmen konvertiert. Damit stehen an der aufgetrennten Stelle der Anschlussleitung alle Daten der ausgekoppelten S₀-Schnittstelle für bereits vorhandene S₀-Messgeräte zur Verfügung.

Der Erfindung liegt nunmehr die Aufgabe zugrunde, ein Verfahren und ein Überwachungssystem bereitzustellen, mit dem eine ständige Überwachung wenigstens eines Teilnehmeranschlusses möglich ist und mit dem im Störfall sofort eine zentrale Sicherheitseinrichtung alarmiert werden kann.

Diese Aufgabe der vorliegenden Erfindung wird zum einen durch die Verfahrensschritte des Anspruchs 1 gelöst.

Danach wird ein Verfahren zur Signalisierung einer Störung wenigstens eines zu überwachenden Teilnehmeranschlusses an eine zentrale Einrichtung zur Verfügung gestellt, wobei der wenigstens eine Teilnehmeranschluss über eine Anschlussleitung mit U_{K0}-Schnittstelle an eine Vermittlungsstelle angeschaltet ist. Um den Teilnehmeranschluss überwachen zu können, wird dieser von der Vermittlungsstelle daueraktiv gehalten, d.h. im Ruhezustand werden ständig, beispielsweise alle zehn Sekunden, vorbestimmte Prüfnachrichten (keep alive, polling) von der Vermittlungsstelle zum Teilnehmeranschluss und umgekehrt übertragen, so dass auf diese Weise eine Unterbrechung der Anschlussleitung grundsätzlich erkannt werden kann. Die Daueraktivierung kann sich auch auf die Schicht 1 beziehen, d. h. die Synchronisation der U_{KO}-Schnittstelle kann zur Überwachung dienen. Eine Überwachungseinrichtung, die in die U_{K0}-Schnittstelle der entsprechenden Anschlussleitung eingeschleift wird, überwacht den wenigstens einen Teilnehmeranschluss. Dies geschieht beispielsweise dadurch, dass die während der Aktivierung übermittelten Prüfnachrichten auf deren Vorhandensein auf der Anschlussleitung überwacht werden. Erfasst die Überwachungseinrichtung eine Störung des wenigstens einen zu überwachenden Teilnehmeranschlusses, beispielsweise eine Unterbrechung der Anschlussleitung, wird eine Verbindung zur zentralen Einrichtung über einen separaten Teilnehmeranschluss insbesondere eines öffentlichen Telekommunikationsnetz hergestellt. Anschliessend wird eine Störmeldung und/oder eine Teilnehmeranschluss-bezogene Information, wie z.B. die Adresse oder Rufnummer des gestörten Teilnehmeranschlusses zur zentralen Einrichtung übertragen.

Auf diese Wiese ist es möglich, einen Teilnehmeranschluss ständig zu überwachen, und im Störfall eine Störmeldung sowie die Adresse des gestörten Teilnehmeranschlusses an eine zentrale Sicherheitseinrichtung zu übertragen.

Um mittels des Verfahrens mehrere der Vermittlungsstelle zugeordnete Teilnehmeranschlüsse zu überwachen und im Störfall deren Zustände zu messen und/oder zu protokollieren, wird nach dem Übertragen der Störmeldung und/oder der Teilnehmeranschluss-bezogenen Information zur zentralen Einrichtung zunächst ein erster Verbindungsaufbau an dieser oder einer anderen externen Endeinrichtung über den separaten Teilnehmeranschluss vorzugsweise zu einem MFV-(Mehrfrequenzwahlverfahren-) steuerbaren Koppelfeld eingeleitet. Das Koppelfeld wird danach in Abhängigkeit der Teilnehmeranschluss-bezogenen Information derart programmiert, dass ein mit dem separaten Teilnehmeranschluss verbundenes Messgerät über eine in der Überwachungseinrichtung enthaltenen U_{KO}-Auskopplung der jeweiligen Anschlussleitung mit dem gestörten Teilnehmeranschluss verbunden werden kann. Anschliessend wird die Verbindung wieder ausgelöst. Danach wird ein zweiter Verbindungsaufbau an der zentralen Einrichtung oder der anderen externen Endeinrichtung über den separaten Teilnehmeranschluss zum Messgerät eingeleitet, welches nunmehr veranlasst wird, den Zustand des gestörten Teilnehmeranschlusses zu messen und/oder zu protokollieren und die Ergebnisse über die bestehenden Verbindung an die zentrale Einrichtung oder an die externe Endeinrichtung zu übertragen.

Vorteilhafte Weiterbildungen sind Gegenstand der Unteransprüche.

Die Überwachungseinrichtung wird zweckmässigerweise in der Nähe der Vermittlungsstelle, d.h. im gleichen Gebäude, in die U_{K0}-Schnittstelle der jeweiligen Anschlussleitung eingeschleift.

Vorzugsweise sind die zu überwachenden Teilnehmeranschlüsse und der separaten Teilnehmeranschluss ISDN-Basisanschlüsse. In diesem Fall ist das Messgerät zum Erstellen eines D-Kanalprotokolls der S₀-Schnittstelle des ISDN-Basisanschlusses ausgebildet. Hierzu muss jedoch jede Anschlussleitung über die U_{K0}-Auskopplung mit der Koppeleinrichtung verbunden werden. Die U_{K0}-Auskopplung jeder Überwachungseinrichtung sorgt dafür, dass die an der U_{K0}-Schnittstelle der Anschlussleitung ausgekoppelten Daten in einen vom Messgerät verarbeitbaren S₀-Rahmen umgesetzt werden. Eine solche U_{K0}-Auskopplung ist aus der DE 197 29072 bekannt.

Die Aufgabe der vorliegenden Erfindung wird zum anderen durch die Merkmale des Anspruchs 5 gelöst.

Danach ist ein Überwachungssystem zum Überwachen wenigstens eines Teilnehmeranschlusses vorgesehen, der über eine Anschlussleitung mit U_{K0}-Schnittstelle an eine Vermittlungsstelle angeschaltet ist. Ferner ist in die U_{K0}" Schnittstelle jeder mit der Vermittlungsstelle verbundenen zu überwachenden Anschlussleitung eine Einrichtung zum Überwachen des dazugehörenden Teilnehmeranschlusses eingeschleift. Jede Überwachungseinrichtung ist mit einer Einrichtung zum Erzeugen einer Störmeldung und/oder Teilnehmeranschluss-bezogenen Information verbindbar, die wiederum mit einem separaten Teilnehmeranschluss verbunden ist. Über diesen separaten Teilnehmeranschluss kann die Einrichtung zum Erzeugen einer Störmeldung und/oder Teilnehmeranschluss-bezogene Information eine Verbindung zu einer zentralen Einrichtung zur Übertragung der Störmeldung und/oder Teilnehmeranschluss-bezogenen Information herstellen. Bei der Einrichtung zur Erzeugung einer Störmeldung und/oder Teilnehmeranschluss-bezogenen Information kann es sich beispielsweise um ein Geräte DS 7500 der Firma effeff handeln.

Mit Ausnahme der zentralen Einrichtung können alle Einrichtungen und Geräte im Gebäude der Vermittlungsstelle untergebracht sein.

Um wenigstens einen Teilnehmeranschluss messen und/oder protokollieren zu können, ist wenigstens eine Überwachungseinrichtung an ein Messgerät anschaltbar, welches mit dem separaten Teilnehmeranschluss verbunden ist. Das Messgerät kann somit den Zustand des über die Überwachungseinrichtung ausgekoppelten gestörten Teilnehmeranschlusses messen und/oder protokollieren und die Ergebnisse über ein öffentliches Netz an die zentrale Einrichtung oder eine andere externe Einrichtung übertragen.

Um mehrere Teilnehmeranschlüsse überwachen zu können, ist ein Koppelfeld zwischen den Überwachungseinrichtungen und dem Messgerät geschaltet. Ferner ist eine MFV-Fernsteuereinrichtung an den separaten Teilnehmeranschluss angeschaltet und mit dem Koppelfeld verbunden, wobei die MFV-Fernsteuereinrichtung von der zentralen Einrichtung oder einer anderen externen Eirichtung zur Steuerung des Koppelfeldes über den separaten Teilnehmeranschluss anwählbar ist.

Enthält die Teilnehmeranschluss-bezogene Information die Adresse eines gestörten Teilnehmeranschlusses, dann kann das Koppelfeld über die MFV-Steuereinrichtung in Abhängigkeit der Adresse derart programmiert werden, dass das Messgerät mit der entsprechenden U_{KO}-Auskopplung verbunden werden kann.

### Vorteilhafte Weiterbildungen sind Gegenstand der Unteransprüche

So weist jede Überwachungseinrichtung vorteilhafterweise einen Detektor und einen steuerbaren Schalter auf, der bei Erfassen einer Störung des zugeordneten Teilnehmeranschlusses durch den Detektor die jeweilige Überwachungseinrichtung mit der Einrichtung zum Erzeugen einer Störmeldung und/oder Teilnehmeranschluss-bezogenen Information verbindet. Dadurch wird die Einrichtung zum Erzeugen einer Störmeldung und/oder Teilnehmeranschluss-bezogenen Information veranlasst, die Störmeldung und/oder Teilnehmeranschluss-bezogene Information über den gestörten Teilnehmeranschluss zu erzeugen und zur zentralen Einrichtung zu übertragen.

Wenn die Teilnehmeranschlüsse ISDN-Basisanschlüsse sind, weist jede Überwachungseinrichtung eine U_{K0}-Auskopplung auf, wobei die S₀-Schnittstelle der Überwachungseinrichtung mit dem Koppelfeld verbunden ist. Auf diese Weise kann die ausgekoppelte S₀-Schnittstelle des gestörten ISDN-Basisanschlusses über das Koppelfeld ausgekoppelt und mit dem Messgerät verbunden werden. Das Messgerät ist in der Lage, den D-, B₁- oder B₂-Kanal einer ISDN-Verbindung zu analysieren.

Erwähnt sei ferner, dass neben den hier erwähnten ISDN-Verbindungen auch Standard-Festverbindungen und Datendirektverbindungen überwacht werden können, die mit einer U_{K0}-Schnittstelle versehen sind.

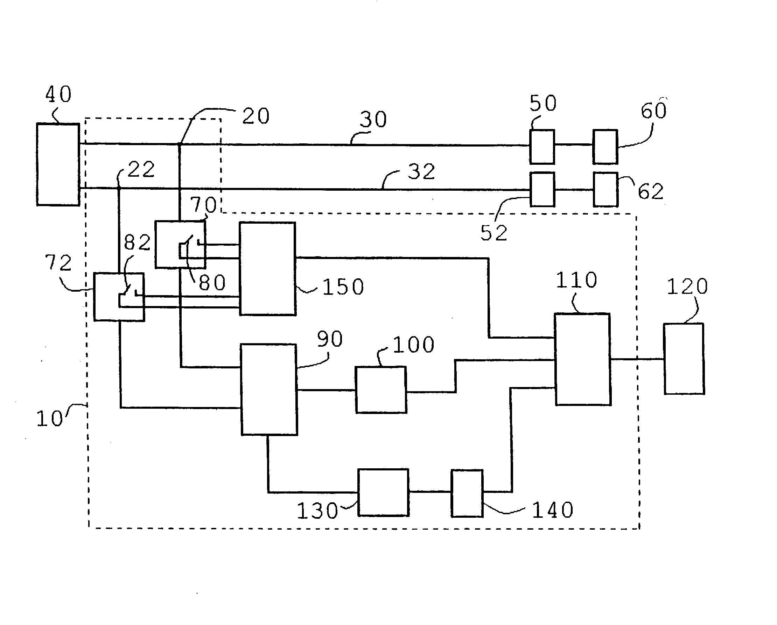

Die Erfindung wird nachstehend anhand eines Ausführungsbeispiels in Verbindung mit der beiliegenden Zeichnung näher erläutert.

Die einzige Figur zeigt ein allgemein mit 10 bezeichnetes Überwachungssystem, welches über eine Überwachungseinrichtung 70 an einer aufgetrennten U_{K0}-Schnittstelle 20 einer Anschlussleitung 30 und über eine Überwachungseinrichtung 72 an einer aufgetrennten U_{K0}-Schnittstelle 22 einer Anschlussleitung 32 in der Nähe einer digitalen Übermittlungsstelle 40 angeschaltet ist. Obwohl nur zwei Anschlussleitungen mit der digitalen Vermittlungsstelle 40 verbunden sind, ist offensichtlich, dass mehrere Anschlussleitungen mit der digitalen Vermittlungsstelle 40 und dem Überwachungssystem 10 verbunden sein können. Teilnehmerseitig sind die Anschlussleitungen 20 und 22 am ISDN-Basisanschluss jeweils mit einer Netzabschlusseinrichtung 50 bzw. 52 abgeschlossen. Jede Netzabschlusseinrichtung 50, 52 ist mit einem ISDN-Telefon 60 bzw. 62 verbunden. An dieser Stelle sei erwähnt, dass das Überwachungssystem 10 nicht nur zur Überwachung von Anschlussleitungen mit ISDN-Basisanschlüssen sondern auch zur Überwachung von Standardfestverbindungen und Datendirektverbindungen geeignet sein kann.

Die Überwachungseinrichtungen 70 und 72 enthalten jeweils nicht dargestellte Detektoren, die als Störung eines ISDN-Basisanschlusses beispielsweise eine Unterbrechung auf der jeweiligen Anschlussleitung 30 oder 32 erfassen können. Ferner weist jede Überwachungseinrichtung 70, 72 einen potentialfreien Kontakt 80 bzw. 82 auf, der jeweils eine durch die entsprechende Überwachungseinrichtung (70, 72) erfasste Störung des zugeordneten Teilnehmeranschlusses einer Einrichtung zum Erzeugen einer Störmeldung und/oder Teilnehmeranschluss bezogenen Information 150, nachfolgend kurz Meldeeinrichtung genannt, signalisieren kann. Ferner weist jede Überwachungseinrichtung 70, 72 eine an sich bekannte U_{K0}-Auskopplung (nicht dargestellt) auf, über den die Überwachungseinrichtungen mit einem Koppelfeld 90 verbindbar sind. Die Funktionsweise der U_{K0}-Auskopplung ist aus der DE 197 29027, die hierin mit aufgenommen wird, bekannt. Die U_{K0}-Auskopplungen sorgen dafür, dass die an den U_{K0}-Schnittstelle 20 und 22 auszukoppelnden Signale in S₀-Rahmen umgesetzt werden, die wiederum in einem herkömmlichen S₀-Messgerät 100, welches mit dem Koppelfeld 90 verbunden ist, verarbeitet werden können. wie nachfolgend noch näher erläutert wird, kann mit Hilfe des Messgerätes 100 der Zustand jedes ISDN-Basisanschlusses, insbesondere der D-Kanal einer ISDN-Verbindung gemessen und protokolliert werden. Das Messgerät 100 ist ferner an einen ISDN-Basisanschluss 110 angeschaltet, über den eine Verbindung über ein öffentliches Netz zu einer zentralen Einrichtung 120 oder einer beliebigen mit einer ISDN-Karte ausgestatteten Endeinrichtung hergestellt werden kann. Auf diese Weise ist es, wie nachfolgend noch näher erläutert wird, möglich, die Messergebnisse und Protokolle des Messgerätes 100 an die zentrale Einrichtung 120 zu übertragen.

An den ISDN-Basisanschluss 110 ist ferner beispielsweise eine MFV-Fernsteuereinrichtung 130 gegebenenfalls über einen herkömmlichen Terminaladapter 140 angeschlossen. Ausgangsseitig ist die MFV-Fernsteuereinrichtung 130 mit dem Koppelfeld 90 verbunden. Die Steuerung des Koppelfeldes 90 mit Hilfe der MFV-Fernsteuereinrichtung 130 kann beispielsweise über die zentrale Einrichtung 120 erfolgen. Dazu muss die zentrale Einrichtung in der Lage sein, Signale nach dem Mehrfrequenzwahlverfahren zu erzeugen. Ein hierfür geeignetes Verfahren ist in der DE 199 34 622 offenbart, die ebenfalls hierin mit aufgenommen wird.

Nachfolgend wird die Funktionsweise des Überwachungssystems 10 näher erläutert. Zunächst sei angenommen, dass die beiden ISDN-Basisanschlüsse der Anschlussleitungen 30 und 32 mit Hilfe einer Daueraktivierung ständig überwacht werden. Infolge der ausgelösten Daueraktivierung werden auch im Ruhezustand etwa alle zehn Sekunden vorbestimmte Testnachrichten zwischen der digitalen Vermittlungsstelle 40 und den ISDN-Telefonen 60 und 62 hin und her übertragen. Solange die Detektoren der Überwachungseinrichtungen 70 und 72 das Vorhandensein dieser Testnachrichten erkennen, befindet sich das Überwachungssystem 10 im sogenannten Überwachungsmodus. Sobald jedoch auf einer der Anschlussleitungen 30 oder 32 keine Testnachrichten mehr detektiert werden, d.h. eine Unterbrechung der Anschlussleitung festgestellt wird, geht das Überwachungssystem 10 bezüglich dieser Anschlussleitung in den Melde- und Messbetrieb über. Hierzu sei beispielsweise angenommen, dass die Anschlussleitung 30 unterbrochen worden ist. Unter Ansprechen auf die Unterbrechung der Anschlussleitung 30 schließt der Detektor der Überwachungseinrichtung 70 den potentialfreien Kontakt 80, wodurch der Meldeeinrichtung 150 eine Störung des ISDN-Basisanschlusses der Anschlussleitung 30 signalisiert wird. Die Meldeeinrichtung 150 erkennt aus der Betätigung des potentialfreien Kontaktes 80 den gestörten ISDN-Basisanschluss und dessen Rufnummer. Daraufhin leitet die Meldeeinrichtung 150 über den ISDN-Basisanschluss 110 eine Verbindung zur zentralen Einrichtung 120 her und übermittelt eine entsprechende Störmeldung sowie die Rufnummer des gestörten ISDN-Basisanschlusses zur zentralen Einrichtung 120. Die Verbindung zwischen der Meldeeinrichtung 150 und der zentralen Einrichtung 120 kann nach der Übermittlung der Störmeldung und Rufnummer ausgelöst werden. Nunmehr leitet eine Überwachungsperson an der zentralen Einrichtung 120 einen Verbindungsaufbau über den ISDN-Basisanschluss 110 zur MFV-Fernsteuereinrichtung 130 ein und gibt an der zentralen Einrichtung 120 die Rufnummer des gestörten ISDN-Basisanschlusses ein, welche mittels Mehrfrequenztönen zur MFV-Fernsteuereinrichtung 130 übertragen wird. Die MFV-Fernsteuereinrichtung 130 steuert unter Ansprechen auf die empfangene Rufnummer des gestörten ISDN-Basisanschlusses das Koppelfeld 90 derart, dass das Messgerät 100 über die U_{K0}-Auskopplung den entsprechenden Teilnehmeranschluss messen und/oder protokollieren kann. Anschliessend löst die Überwachungsperson die Verbindung zur MFV-Fernsteuereinrichtung 130 wieder aus und leitet einen zweiten Verbindungsaufbau über den ISDN-Basisanschluss 110 zum Messgerät 100 ein. Das Messgerät 100 ist nunmehr mit der U_{K0}-Auskopplung der entsprechenden Überwachungseinrichtung (70, 72) verbunden und kann somit den D-, B₁- oder B₂-Kanal des gestörten ISDN-Basisanschlusses analysieren und protokollieren. Die aktuellen Zustände, Ergebnisse und Protokolle des gestörten ISDN-Basisanschlusses können über den ISDN-Basisanschluss 110 vom Messgerät 100 zur zentralen Einrichtung 120 übertragen und dort der Überwachungsperson an einer Anzeige dargestellt werden. Die Überwachungsperson kann dadurch unmittelbar entscheiden, ob ein Servicetechniker zum Kunden des gestörten ISDN-Basisanschlusses geschickt werden muss, oder ob eine Fernwartung möglich ist. Nach Behebung des Fehlers wird das Überwachungssystem 10 bezüglich der Anschlussleitung 30 wieder in den Überwachungsmodus zurückgesetzt, d.h. der potentialfreie Kontakt 80 der Überwachungseinrichtung 70 wird wieder geöffnet.

Obwohl in dem vorliegenden Beispiel lediglich ein Messgerät 100 mit dem Koppelfeld 90 verbunden ist und lediglich ein ISDN-Basisanschluss 110 verwendet wird, ist es denkbar, mehrere Messgeräte 100 mit dem Koppelfeld 90 zu verbinden und die Messgeräte über mehrere ISDN-Basisanschlüsse mit der zentralen Einrichtung 120 zu verbinden.

Dank des beschriebenen Überwachungssystems 10 ist es möglich, einen oder mehrere Teilnehmeranschlüsse ständig zu überwachen und im Störfall eine Störmeldung sowie die Adresse des gestörten Teilnehmeranschlusses an eine zentrale Einrichtung zu übertragen. Darüber hinaus ist es möglich, von der zentralen Einrichtung aus über das öffentliche Netz direkt in vielfältiger Form auf das Überwachungssystem Einfluss zu nehmen. Beispielsweise ist es denkbar, für einen gestörten ISDN-Basisanschluss eine Rufumleitung in der Vermittlungsstelle 40 zu aktivieren.

### Bezugszeichenliste

- 10: Überwachungssystem
- 20, 22: U_{K0}-Schnittstelle
- 30, 32: Anschlussleitung
- 40: digitale Vermittlungsstelle
- 50, 52: Netzabschlusseinrichtung
- 60, 62: ISDN-Telefon
- 70, 72: Überwachungseinrichtung
- 80, 82: potentialfreier Kontakt
- 90: Koppelfeld
- 100: S₀-Messgerät
- 110: ISDN-Basisanschluss
- 120: zentrale Einrichtung
- 130: MFV-Fernsteuereinrichtung
- 140: Terminaladapter
- 150: Einrichtung zum Erzeugen einer Störmeldung und/oder Teilnehmeranschluss-bezogenen Information, Meldeeinrichtung

## Patentansprüche

1. Verfahren zur Signalisierung einer Störung wenigstens eines zu überwachenden Teilnehmeranschlusses an eine zentrale Einrichtung (120), wobei der wenigstens eine Teilnehmeranschluss über eine Anschlussleitung (30, 32) mit U_{K0}-Schnittstelle (20, 22) an eine Vermittlungsstelle (40) angeschaltet ist, mit folgenden Verfahrensschritten:
- Daueraktivieren des wenigstens einen zu überwachenden Teilnehmeranschlusses von der Vermittlungsstelle;
- Überwachen des wenigstens einen Teilnehmeranschlusses mittels einer Überwachungseinrichtung (70,72), die in die U_{K0}-Schnittstelle (20, 22) der entsprechenden Anschlussleitung (30, 32) eingeschleift wird;
- Herstellen einer Verbindung zur zentralen Einrichtung (120) über einen separaten Teilnehmeranschluss (110) unter Ansprechen auf eine von der Einrichtung erfassten Störung des wenigstens einen zu überwachenden Teilnehmeranschlusses; und
- Übertragen einer Störmeldung und/oder einer Teilnehmeranschluss-bezogenen Information zur zentralen Einrichtung,
**gekennzeichnet durch** folgende Schritte:
Einleiten eines ersten Verbindungsaufbaus an der zentralen Einrichtung (120) oder einer anderen externen Endeinrichtung über den separaten Teilnehmeranschluss (110) zu einem steuerbaren Koppelfeld (90) nach dem Übertragen der Störmeldung und/oder der Teilnehmeranschluss-bezogenen Information zur zentralen Einrichtung;
Programmieren des Koppelfeldes (90) in Abhängigkeit der Teilnehmeranschluss-bezogenen Information derart, dass ein mit dem separaten Teilnehmeranschluss (110) verbundenes Messgerät (100) mit der Überwachungseinrichtung (70, 72) der entsprechenden Anschlussleitung (30, 32) verbunden werden kann, wobei das Koppelfeld (90) zwischen den Überwachungseinrichtungen (70, 72) und dem Messgerät (100) geschaltet ist;
Auslösen der Verbindung; und
Einleiten eines zweiten Verbindungsaufbaus an der zentralen Einrichtung (120) oder der anderen externen Endeinrichtung über den separaten Teilnehmeranschluss (110) zum Messgerät (100), welches den Zustand des gestörten Teilnehmeranschluss messen und/oder protokollieren und an die zentrale Einrichtung oder an die andere externe Einrichtung übertragen kann..

2. Verfahren nach Anspruch 1, **dadurch gekennzeichnet, dass** die Überwachungseinrichtung (70, 72) in der Nähe der Vermittlungsstelle (40) in die U_{K0}-Schnittstelle (20, 22) der entsprechenden Anschlussleitung (30, 32) eingeschleift wird.

3. Verfahren nach einem der Ansprüche 1 oder 2, **dadurch gekennzeichnet, dass** der wenigstens eine zu überwachende Teilnehmeranschluss und der separate Teilnehmeranschluss jeweils ein ISDN-Basisanschluss ist.

4. Verfahren nach Anspruch 3, **dadurch gekennzeichnet, dass** das Messgerät (100) ein D-, B₁- oder B₂-Kanalprotokoll erstellen kann, und dass jede Anschlussleitung (30, 32) über eine in der Überwachungseinrichtung (70, 72) enthaltenen U_{K0}-Auskopplung mit dem Koppelfeld (90) verbunden wird.

5. Überwachungssystem zum Überwachen wenigstens eines Teilnehmeranschlusses, der über eine Anschlussleitung (30, 32) mit U_{K0}-Schnittstelle (20, 22) an eine Vermittlungsstelle (40) angeschaltet ist, wobei in die U_{K0}-Schnittstelle (20, 22) jeder mit der Vermittlungsstelle (40) verbundenen Anschlussleitung (30, 32), an die ein zu überwachender Teilnehmeranschluss angeschaltet ist, eine Einrichtung (70, 72) zum Überwachen des damit verbundenen Teilnehmeranschlusses eingeschleift ist,
jede Überwachungseinrichtung (70, 72) mit einer Einrichtung zum Erzeugen (150) einer Störmeldung und/oder Teilnehmeranschluss-bezogenen Information verbindbar ist, und wobei
die Einrichtung (150) zum Erzeugen einer Störmeldung und/oder Teilnehmeranschluss-bezogenen Information mit einem separaten Teilnehmeranschluss (110) verbunden ist, über den diese eine Verbindung zu einer zentralen Einrichtung (120) zur Übertragung der Störmeldung und/oder Teilnehmeranschluss-bezogenen Information herstellen kann, **dadurch gekennzeichnet, dass** wenigstens eine Überwachungseinrichtung (70, 72) an ein Messgerät (100) anschaltbar ist, welches mit dem separaten Teilnehmeranschluss (110) verbunden ist und den Zustand des der Überwachungseinrichtung (70, 72) zugeordneten gestörten Teilnehmeranschluss messen und/oder protokollieren und an die zentrale Einrichtung (120) oder eine andere externe Einrichtung übertragen kann, und dass ein Koppelfeld (90) zwischen den Überwachungseinrichtungen (70, 72) und dem Messgerät (100) geschaltet ist, dass eine Fernsteuereinrichtung (130) an den separaten Teilnehmeranschluss (110) angeschaltet und mit dem Koppelfeld (90) verbunden ist, wobei die Fernsteuereinrichtung (130) von der zentralen Einrichtung (120) oder einer anderen externen Einrichtung zur Steuerung des Koppelfeldes (90) über den separaten Teilnehmeranschluss (110) anwählbar ist, und wobei die Teilnehmeranschluss-bezogene Information die Adresse eines gestörten Teilnehmeranschlusses enthält,.und dass das Koppelfeld (90) über die Steuereinrichtung (130) in Abhängigkeit der Adresse derart programmierbar ist, dass das Messgerät (100) mit der entsprechenden Überwachungseinrichtung (70, 72) verbunden werden kann.

6. Überwachungssystem nach Anspruch 5, **dadurch gekennzeichnet, dass** jede Überwachungseinrichtung (70, 72) einen Detektor und einen steuerbaren Schalter (80, 82) aufweist, der bei Erfassen einer Störung des zugeordneten Teilnehmeranschlusses durch den Detektor der jeweiligen Überwachungseinrichtung (70, 72) die erfasste Störung der Einrichtung (150) zum Erzeugen einer Störmeldung und/oder Teilnehmer-bezogenen Information signalisiert.

7. Überwachungssystem nach Anspruch 5 oder 6, **dadurch gekennzeichnet, dass**
die Teilnehmeranschlüsse ISDN-Basisanschlüsse sind, dass jede Überwachungseinrichtung (70, 72) eine U_{K0}-Auskopplung aufweist, wobei die S₀-Schnittstelle mit dem Koppelfeld (90) verbunden ist, und dass das Messgerät (100) zur Analyse des D-, B₁- oder B₂-Kanals einer ISDN-Verbindung ausgebildet ist.

## Claims

1. A method for signaling to a central facility (120) a fault of at least one subscriber's connection to be monitored, wherein the at least one subscriber's connection is connected to a switching center (40) via a local line (30, 32) that includes a U_{K0} interface (20, 22), the method comprising the steps of:
- permanently activating the at least one subscriber's connection to be monitored, by the switching center;
- monitoring the at least one subscriber's connection using a monitoring device (70, 72) that is looped into the U_{K0} interface (20, 22) of the respective local line (30, 32);
- establishing a connection to the central facility (120) via a separate subscriber's connection (110) in response to a fault of the at least one subscriber's connection to be monitored detected by the device; and
- transmitting a fault message and/or a subscriber's connection related information to the central facility; **characterized by** the steps of:
subsequent to the transmission of the fault message and/or the subscriber's connection related information to the central facility, initiating a first call set-up at the central facility (120) or at another external terminal device to a controllable switching matrix (90) via the separate subscriber's connection (110);
programming the switching matrix (90) as a function of the subscriber's connection related information so that a measuring device (100) connected to the separate subscriber's connection (110) can be connected to the monitoring device (70, 72) of the respective local line (30, 32), wherein the switching matrix (90) is connected between the monitoring devices (70, 72) and the measuring device (100);
releasing the connection; and
initiating a second call set-up at the central facility (120) or at the other external terminal device via the separate subscriber's connection (110) to the measuring device (100) which is capable of measuring and/or logging the state of the disturbed subscriber's connection and of transmitting the state to the central facility or to the other external device.

2. The method according to claim 1, **characterized in that** the monitoring device (70, 72) is looped into the U_{K0} interface (20, 22) of the respective local line (30, 32) in the vicinity of the switching center (40).

3. The method according to any of claims 1 or 2, **characterized in that** each of the at least one subscriber's connection to be monitored and the separate subscriber's connection is an ISDN basic access.

4. The method according to claim 3, **characterized in that** the measuring device (100) is capable of creating a D, B₁, or B₂ channel protocol, and that each subscriber's connection (30, 32) is connected to the switching matrix (90) via a U_{K0} output port included in the monitoring device (70, 72).

5. A monitoring system for monitoring at least one subscriber's connection which is connected to a switching center (40) via a local line (30, 32) that includes a U_{K0} interface (20, 22); wherein
a device (70, 72) for monitoring an associated subscriber's connection is looped into the U_{K0} interface (20, 22) of each subscriber's connection (30, 32) which is connected to the switching center (40) and to which a subscriber's connection to be monitored is connected; each monitoring device (70, 72) is connectable to a device for generating (150) a fault message and/or subscriber's connection related information; and wherein the device (150) for generating a fault message and/or subscriber's connection related information is connected to a separate subscriber's connection (110), via which it is capable of establishing a connection to a central facility (120) for transmitting the fault message and/or subscriber's connection related information;
**characterized in that** at least one monitoring device (70, 72) is connectable to a measuring device (100) which is connected to the separate subscriber's connection (110) and is capable of measuring and/or logging the state of the disturbed subscriber's connection associated with said monitoring device (70, 72) and of transmitting the state to the central facility (120) or to another external device; and that a switching matrix (90) is connected between the monitoring devices (70, 72) and the measuring device (100); that
a remote control device (130) is connected to the separate subscriber's connection (110) and connected to the switching matrix (90); wherein
the remote control device (130) can be dialed by the central facility (120) or by another external device via the separate subscriber's connection (110), for controlling the switching matrix (90); and wherein
the subscriber's connection related information includes the address of a disturbed subscriber's connection; and that the switching matrix (90) can be programmed via the control device (130) as a function of the address so that the measuring device (100) can be connected with the respective monitoring device (70, 72).

6. The monitoring system according to claim 5, **characterized in that** each monitoring device (70, 72) includes a detector and a controllable switch (80, 82) which, when the detector of the respective monitoring device (70, 72) detects a fault of the associated subscriber's connection, signals the detected fault to the device (150) for generating a fault message and/or subscriber's connection related information.

7. The monitoring system according to claim 5 or 6, **characterized in that** the subscriber's connection are ISDN basic accesses; that
each monitoring device (70, 72) has a U_{K0} output port, with the S₀ interface being connected to the switching matrix (90); and that
the measuring device (100) is adapted so as to be capable of analyzing the D, B₁, or B₂ channel of an ISDN connection.

## Revendications

1. Procédé de signalisation du dysfonctionnement d'au moins une connexion d'abonné à surveiller à un dispositif central (120), l'au moins une connexion d'abonné étant connectée, par l'intermédiaire d'une ligne de connexion (30, 32), avec une interface U_{K0} (20, 22), à un central téléphonique (40), avec les étapes de procédé suivantes :
- activation permanente de l'au moins une connexion d'abonné à surveiller par le central téléphonique ;
- surveillance de l'au moins une connexion d'abonné à l'aide d'un dispositif de surveillance (70, 72), qui est bouclé dans l'interface U_{K0} (20, 22) de la ligne de connexion (30, 32) correspondante ;
- établissement d'une liaison avec le dispositif central (120) par l'intermédiaire d'une connexion d'abonné distincte (110) en réaction à la détection par le dispositif d'un dysfonctionnement de l'au moins une connexion d'abonné à surveiller ; et
- transmission d'un message d'erreur et/ou d'une information concernant la connexion d'abonné au dispositif central,
**caractérisé par** les étapes suivantes :
initiation d'un premier établissement de liaison avec le dispositif central (120) ou avec un autre dispositif terminal externe par l'intermédiaire de la connexion d'abonné distincte (110), vers un réseau à commutation contrôlable (90), après la transmission du message d'erreur et/ou de l'information concernant la connexion d'abonné au dispositif central ;
programmation du réseau à commutation (90) en fonction de l'information concernant la connexion d'abonné, de façon à ce qu'un appareil de mesure (100), relié avec la connexion d'abonné distincte (110), peut être relié au dispositif de surveillance (70, 72) de la ligne de connexion (30, 32) correspondante, le réseau à commutation (90) étant branché entre les dispositifs de surveillance (70, 72) et l'appareil de mesure (100) ;
déconnexion de la liaison ; et
initiation d'un deuxième établissement de liaison avec le dispositif central (120) ou l'autre dispositif terminal externe par l'intermédiaire de la connexion d'abonné distincte (110) avec l'appareil de mesure (100), qui permet de mesurer et/ou consigner l'état de la connexion d'abonné défaillante et le transmettre au dispositif central ou à l'autre dispositif externe.

2. Procédé selon la revendication 1, **caractérisé en ce que** le dispositif de surveillance (70, 72) est bouclé à proximité du central téléphonique (40) dans l'interface U_{K0} (20, 22) de la ligne de connexion (30, 32) correspondante.

3. Procédé selon l'une des revendications 1 ou 2, **caractérisé en ce que** l'au moins une connexion d'abonné à surveiller et la connexion d'abonné distincte sont des connexions de base RNIS.

4. Procédé selon la revendication 3, **caractérisé en ce que** l'appareil de mesure (100) peut créer un protocole de canal D, B₁ ou B₂, et **en ce que** chaque ligne de connexion (30, 32) est relié au réseau à commutation (90) par l'intermédiaire d'un découplage U_{K0} contenu dans le dispositif de surveillance (70, 72).

5. Système de surveillance pour la surveillance d'au moins une connexion d'abonné, qui est branché, par l'intermédiaire d'une ligne de connexion (30, 32) avec une interface U_{K0} (20, 22), à un central téléphonique (40), un dispositif (70, 72), destiné à la surveillance de la connexion d'abonné qui y est reliée, est bouclé dans l'interface U_{K0} (20, 22) de chaque ligne de connexion (30, 32) reliée au central téléphonique (40), à laquelle la connexion d'abonné à surveiller est branchée,
chaque dispositif de surveillance (70, 72) pouvant être relié à un dispositif pour la génération (150) d'un message d'erreur et/ou d'une information concernant la connexion d'abonné, et
le dispositif (150) pour la génération d'un message d'erreur et/ou d'une information concernant la connexion d'abonné étant relié à une connexion d'abonné distincte (110), par l'intermédiaire de laquelle il peut établir une liaison avec un dispositif central (120) pour la transmission du message d'erreur et/ou de l'information concernant la connexion d'abonné,
**caractérisé en ce qu'**au moins un dispositif de surveillance (70, 72) peut être branché à un appareil de mesure (100), qui est relié à la connexion d'abonné distincte (110) et qui permet de mesurer et/ou de consigner l'état de la connexion d'abonné défaillante correspondant au dispositif de surveillance (70, 72) et de le transmettre au dispositif central (120) ou à un autre dispositif externe, et
**en ce qu'**un réseau à commutation (90) est branché entre les dispositifs de surveillance (70, 72) et l'appareil de mesure (100), **en ce qu'**un dispositif de commande à distance (130) est branché à la connexion d'abonné distincte (110) et relié au réseau à commutation (90), le dispositif de commande à distance (130) pouvant être sélectionné par le dispositif central (120) ou un autre dispositif externe pour le contrôle du réseau à commutation (90) par l'intermédiaire de la connexion d'abonné distincte (110), et l'information concernant la connexion d'abonné contenant l'adresse d'une connexion d'abonné défaillante, et **en ce que** le réseau à commutation (90) peut être programmé par l'intermédiaire du dispositif de commande (130) en fonction de l'adresse, de façon à ce que l'appareil de mesure (100) puisse être relié au dispositif de surveillance (70, 72) correspondant.

6. Système de surveillance selon la revendication 5, **caractérisé en ce que** chaque dispositif de surveillance (70, 72) comprend un détecteur et un interrupteur contrôlable (80, 82), qui, lors de la détection d'un dysfonctionnement de la connexion d'abonné correspondante, signale, grâce au détecteur du dispositif de surveillance (70, 72) correspondant, le dysfonctionnement détecté au dispositif (150) pour la génération d'un message d'erreur et/ou d'une information concernant l'abonné.

7. Système de surveillance selon la revendication 5 ou 6, **caractérisé en ce que** les connexions d'abonnés sont des connexions de base RNIS, **en ce que** chaque dispositif de surveillance (70, 72) comprend un découplage U_{K0}, l'interface S₀ étant reliée au réseau à commutation (90), et **en ce que** l'appareil de mesure (100) est conçu pour l'analyse du canal D, B₁ ou B₂ d'une liaison RNIS.
